# EUROPEAN PATENT APPLICATION

(11) **EP 4 786 652 A1**
(43) Date of publication of application: **05.08.2026**
(21) Application number: 25155023.2
(22) Date of filing: 30.01.2025
(51) Int. Cl.: C25B 1/23, B01D 53/34, C25B 3/03, C25B 3/07, C25B 3/26, C25B 11/032, C25B 11/052, C25B 11/061, C25B 15/08

(54) **GAS DIFFUSION ELECTRODE FOR ELECTROCHEMICAL GAS CONVERSION**

(71) Applicant: Imec VZW, 3001 Leuven (BE)
(72) Inventor: BLOM, Martijn Jan Willem, 3001 Heverlee (BE); VEREECKEN, Philippe, 3321 Hoegaarden (BE)
(74) Representative: Winger

(57) **Abstract**

In a first aspect, the present invention relates to a gas diffusion electrode (15) for electrochemical gas conversion, comprising: i) a porous solid structure (20), comprising a network (30) formed of a plurality of interconnected electrically conductive wires, and a catalytic surface (32) for catalysing the electrochemical gas conversion, said catalytic surface (32) being a surface of the network (30) as such or of a catalyst (31) coating the network (30); and ii) an electrolyte (50) in the porous solid structure (20) and in contact with the catalytic surface (32); wherein-in operation-at least one side of the porous solid structure (20) is directly exposed to a gas flow comprising the gas to be converted (60), or indirectly exposed to said gas flow through a diffusion layer having a thickness of 10 µm or less, preferably 1 µm or less.

## Description

### Technical field of the invention

The present invention relates to electrochemical gas conversion, and more specifically to electrodes therefor.

### Background of the invention

For various applications from production of chemicals (e.g. hydrogen, ammonia and/or various hydrocarbons), over the removal of pollutants (e.g. CO, CO₂ and/or NO_{X}), to energy production and/or storage, there is an interest to use electrochemical gas conversion, wherein-optionally amongst others-an electrochemical reaction is used to convert a gas into a different chemical product. A particularly pressing issue is the increasing levels of atmospheric carbon dioxide (CO₂) that have become a critical concern due to their impact on global climate change. As a result, significant attention has been directed towards developing technologies that can effectively capture and convert this greenhouse gas into valuable products such as chemical reagents (e.g. carbon monoxide, methane, ethylene and/or ethanol), synthetic fuels, etc. Electrochemical reduction of CO₂-also known as CO₂ reduction reactions (CO₂RR)-offers a promising pathway to that effect.

Typically, electrochemical reactions are carried out in an electrochemical cell, which consists of at least two electrodes (anode and cathode, with optionally a reference electrode) in contact with an electrolyte. These electrodes apply an electric current to drive a non-spontaneous electrochemical reaction. The reagent to be converted may be introduced to one of the electrodes, where it can undergo one or more redox (reduction-oxidation) reactions, optionally facilitated by a catalyst and/or alongside one or more non-redox reactions. Alternatively or complimentarily, not (only) the reagent of interest as such but another substance (e.g. a co-reagent) undergoes the electrochemical reaction, which in turn leads to further reactions that result in the reagent of interest being converted.

Standard electrode architectures are however typically not suitable for gas conversion reactions at an industrially relevant scale. Indeed, electrodes in a traditional electrochemical cell are submersed in a liquid electrolyte, while gas solubility and diffusion in such electrolytes is typically low. Accordingly, the electrochemical conversion of the gas at the electrode is diffusion/transport limited and the rate at which the gas reaches the electrode is too low to sustain a good current density and throughput. Moreover, at the potentials typically required for the desired gas conversion, several parasitic side reactions-such as conversion of the gas to another product than the one desired, further conversion of the desired product to an undesired one, conversion of another substance (e.g. water, electrolyte, other dissolved gasses; resulting for instance in hydrogen evolution and/or reduction of oxygen)-are typically thermodynamically unavoidable. These side reactions decrease the Faradaic efficiency (i.e. the fraction of the total amount of electrons/current provided which is utilized to perform the desired electrochemical reaction(s)) toward the desired reaction product(s). Moreover, given the unfavourable kinetics for the desired reaction, these side reactions may be even more problematic than they are on thermodynamic grounds alone. The aforementioned issues are further exacerbated by the fact that the gas to be converted is in practice typically mixed with other gases (e.g. as part of a flue gas or ambient air), and may even make up but a small fraction of the gas mixture. Increasing the partial pressure of the gas to be converted can improve its solubility and diffusion rate to an extent, but is not always practical, requires additional steps (e.g. not only increasing the pressure of the gas flow as a whole, but in some cases first having to concentrate the gas to be converted-e.g. CO₂-from the source of the gas mixture) and thus brings with it significant additional time and costs. For example, for CO₂ conversion to reach a substantial current density (e.g. above 200 mA/cm²) for adequate industrial throughput, a partial pressure above 20 bar is required.

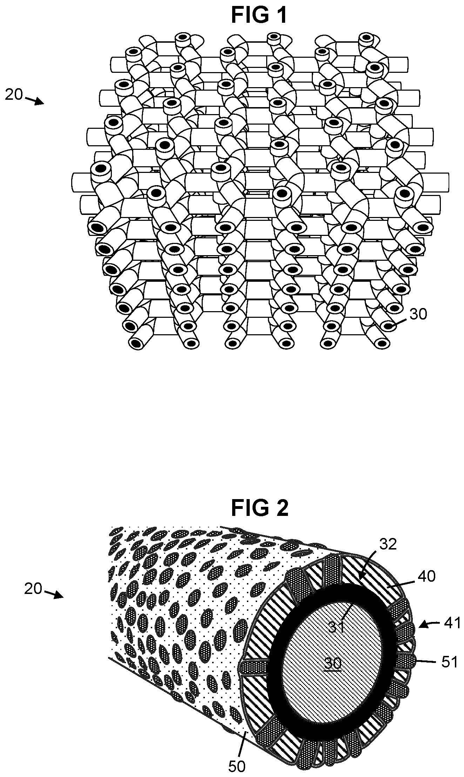

To address these problems with standard electrode architectures, gas diffusion electrodes (GDE) have been investigated; e.g. as discussed by Hernandez-Aldave and Andreoli (HERNANDEZ-ALDAVE, Sandra; ANDREOLI, Enrico. Fundamentals of gas diffusion electrodes and electrolysers for carbon dioxide utilisation: challenges and opportunities. Catalysts, 2020, 10.6: 713.; see e.g. Figure 1, 2 and 5 therein). Gas diffusion electrodes are gas-fed as opposed to liquid-/aqueous-fed: they are not fully submersed in-even though they may be fully filled with-electrolyte, but have at least one side exposed to the gas/gas mixture, so that the gas does not need to pass through the bulk electrolyte. Accordingly, they enhance the mass transport of the gas to be converted by providing a shorter diffusion path through the electrolyte to the electrode surface, thereby improving the reaction kinetics and thus the achievable throughput. Notwithstanding, the gas diffusion electrodes as known in the art face several challenges that limit their effectiveness and scalability.

To achieve high-current throughput, the electrical resistance of the electrode needs to be low. However, in gas diffusion electrodes such as described by Hernandez-Aldave and Andreoli, the current to the catalyst layer is carried through conductive carbon-based assemblies. These inherently suffer from Ohmic losses, thereby hindering the performance and efficiency of the electrochemical cell.

While less pronounced than for standard electrode architectures, the gas partial pressure needed to reach a good efficiency and throughput is still considerable. For instance, a partial CO₂ pressure of about 1 bar for CO₂ gas conversion (whereas the partial pressure in ambient air is only about 0.4 mbar). Accordingly, the additional steps of pressurizing and/or concentrating, and the additional time and monetary costs are still present.

There is thus still a need in the art for gas diffusion electrodes which address at least some of the challenges outlined above.

### Summary of the invention

It is an object of the present invention to provide good gas diffusion electrodes for electrochemical gas conversion. It is a further object of the present invention to provide good electrochemical cells, methods and uses associated therewith. This objective is accomplished by the aspects of the present invention.

In a first aspect, the present invention relates to a gas diffusion electrode for electrochemical gas conversion, comprising: i) a porous solid structure, comprising a network formed of a plurality of interconnected electrically conductive wires, and a catalytic surface for catalysing the electrochemical gas conversion, said catalytic surface being a surface of the network as such or of a catalyst coating the network; and ii) an electrolyte in the porous solid structure and in contact with the catalytic surface; wherein-in operation-at least one side of the porous solid structure is directly exposed to a gas flow comprising the gas to be converted, or indirectly exposed to said gas flow through a diffusion layer having a thickness of 10 µm or less, preferably 1 µm or less.

In a second aspect, the present invention relates to an electrochemical cell comprising the gas diffusion electrode according to any embodiment of the first aspect.

In a third aspect, the present invention relates to a method for converting a gas, comprising:
a) providing a gas flow comprising the gas to be converted alongside and/or through a porous solid structure of a gas diffusion electrode in an electrochemical cell according to any embodiment of the second aspect, and b) energizing the network of interconnected electrically conductive wires to electrochemically convert the gas.

In a fourth aspect, the present invention relates to a use of a gas diffusion electrode according to any embodiment of the first aspect for electrochemical gas conversion.

It is an advantage of embodiments of the present invention that a high catalytic surface area for the gas conversion can be provided. It is a further advantage of embodiments of the present invention that this can be in the form of a large density of nanoreactors.

It is an advantage of embodiments of the present invention that the network has a low electrical resistance, thereby minimizing ohmic losses and thus allowing for high-current throughput without significant energy loss.

It is an advantage of embodiments of the present invention that they ensure-albeit different implementations may do so to varying degrees (such as depending on the extent to which the electrolyte fills the porous solid structure)-efficient mass transport of reactants and removal of products, improving the achievable gas conversion reaction rates and current densities. It is a further advantage of embodiments of the present invention that non-gaseous diffusion lengths (e.g. through the electrolyte) towards the catalytic surface can be drastically decreased (e.g. down to only a few nanometres). It is yet a further advantage that the gas conversion is thereby not necessarily diffusion-limited anymore.

It is an advantage of embodiments of the present invention that gas conversion from dilute gases (e.g. flue gases or ambient air) can be performed-without prior concentration and/or (exceedingly) high gas pressures-, expanding their applicability to various industrial and environmental settings.

It is an advantage of embodiments of the present invention that the gas diffusion electrode does not use a bulk liquid electrolyte.

It is an advantage of embodiments of the present invention that a compact (e.g. 'zero-gap') electrode/membrane assembly can be made.

It is an advantage of embodiments of the present invention that they allow operation at lower cell potentials, reducing energy costs.

It is an advantage of embodiments of the present invention that the formation and accumulation of gas bubbles-which pose a risk of hindering or preventing the supply of reactants-is substantially diminished as compared to a standard electrode architecture using a bulk electrolyte.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG 1 is a schematic representation of a porous solid structure, in accordance with embodiments of the present invention.
FIG 2 is a schematic representation of a cross-section through a porous solid structure, in accordance with embodiments of the present invention.
FIG 3 is a schematic representation of a nanopore in a nanoporous coating over the catalytic surface of a porous solid structure, in accordance with embodiments of the present invention.
FIG 4 is a schematic representation of a first type of electrochemical cell, in accordance with embodiments of the present invention.
FIG 5 is a schematic representation of an alternatively filled nanopore in a nanoporous coating over the catalytic surface of a porous solid structure, in accordance with embodiments of the present invention.
FIG 6 is a schematic representation of a second type of electrochemical cell in accordance with embodiments of the present invention.
FIG 7 is a schematic representation of the porous solid structure in the second type of electrochemical cell.
FIG 8 is a scanning electron microscope (SEM) image of the porous solid structure in the second type of electrochemical cell.
FIG 9 is a schematic representation of an experimental setup using an electrochemical cell in accordance with the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term 'comprising', used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term 'comprising' therefore covers the situation where only the stated features are present and the situation where these features and one or more other features are present. Thus, the scope of the expression 'a device comprising means A and B' should not be interpreted as being limited to devices consisting only of components A and B. It means that with respect to the present invention, the only relevant components of the device are A and B.

Reference throughout this specification to 'one embodiment' or 'an embodiment' means that a particular feature, structure or characteristic described in connection with the embodiment is included in at least one embodiment of the present invention. Thus, appearances of the phrases 'in one embodiment' or 'in an embodiment' in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, the term 'porous solid structure' refers to a (continuous) structure that is solid and contains pores (which may also be referred to as 'voids', 'spaces' or 'empty volume') within its volume. The porous solid structures used in the present invention are moreover permeable, allowing a fluid (e.g. comprising the gas to be converted) to pass therethrough. The porosity (or 'void fraction') is a measure of the amount of empty volume within over the total (i.e. envelope) volume of the structure; typically expressed as a fraction (between 0 and 1) or percentage (between 0% and 100%). The porosity is experimentally accessible through various forms of porosimetry, porometry or pycnometry. Depending on the type used, these techniques can characterize voids in the order of nm to >10 µm.

As used herein, and unless otherwise specified, the term 'network' refers to a physical structure of interconnected components, such as electrically conductive wires. Examples of networks include, but are not limited to, meshes, grids, lattices, and three-dimensional wireframe structures.

As used herein, and unless otherwise specified, the term 'electrically conductive wires' refers to elongated structures capable of conducting electricity. Examples of electrically conductive wires include, but are not limited to, metal wires, metal alloy wires, or semiconductor wires. The electrically conductive wires preferably have a conductivity of at least 1 S/cm, preferably at least 10 S/cm, more preferably at least 10² S/cm, yet more preferably at least 10³ S/cm, still yet more preferably at least 10⁴ S/cm, most preferably at least 10⁵ S/cm. In bulk, metals such as copper or nickel typically have remarkably high electrical conductivity values above 10⁵ S/cm, while carbon materials such as graphite have electrical conductivity values in the order of 10² S/cm. The electrical conductivity of a conductive material is also related to its porosity. For example, metallic foams of high porosity (e.g. 90% to 99% porosity) have 100 times to 1000 times reduced electrical conductivity as compared to the bulk metal, e.g. 10²-10³ S/cm. By comparison, porous carbon materials such as compressed carbon blacks (e.g. 75% to 90% porosity), compressed carbon nanotubes (e.g. 80% to 90% porosity) or compressed graphene (e.g. 80% to 90% porosity) show conductivities in the range between 10² S/cm and 1 S/cm.

As used herein, and unless otherwise specified, the term 'dielectric' refers to a material-which-at least in bulk-is an electrical insulator and that can be polarised by an applied electric field. Examples of dielectrics include, but are not limited to, oxides (e.g. SiO₂, TiO₂, Al₂O₃, MnOₓ, ZrO₂ or ZnOₓ), phosphates (e.g. Li₃PO₄ or Ca₃(PO₄)₂), nitrides (e.g. SisN₄ or TiN), metal-organic frameworks (MOFs) or (non-conductive) polymers (e.g. polyethylene (PE), polytetrafluoroethylene (PTFE) or polyimide (PI)).

As used herein, and unless otherwise specified, the term 'electrical insulator' refers to a material/structure that has a high electrical resistance and can prevent or limit the flow of electric current. The electrical insulator preferably has a conductivity of at most 10⁻⁵ S/cm, preferably at most 10⁻⁶ S/cm, more preferably at most 10⁻⁷ S/cm, yet more preferably at most 10⁻⁸ S/cm, still yet more preferably at most 10⁻⁹ S/cm, most preferably at most 10⁻¹⁰ S/cm.

As used herein, and unless otherwise specified, the term 'catalytic surface' refers to a surface capable of catalysing a chemical reaction. Within the present invention, the catalytic surface is more specifically for catalysing an electrochemical gas conversion. The catalytic surface may be the inherent surface of the network as such or that of a catalyst coated over the network. Examples include the surface of copper wires, silver wires or wires coated with a layer of platinum.

As used herein, and unless otherwise specified, the term 'gas' refers to one of the four fundamental states of matter (the others being 'solid', 'liquid' and 'plasma'). In some fields, a further distinction is sometimes made between a gaseous phase (i.e. a substance in the gas state at a temperature higher than its critical temperature) and a vapour (i.e. a substance-e.g. an evaporated liquid-in the gas state at a temperature lower than its critical temperature). For the purpose of the present invention however, substances in the gaseous phase and vapours typically act substantially similar, so this distinction is herein not further made and only the term `gas' in its broad sense (i.e. as one of the four fundamental states) is used-which thus includes 'vapour'.

As used herein, and unless otherwise specified, the term 'gas conversion' refers to a process involving a gas undergoing one or more chemical reactions to convert it into a different chemical product. In some instances, liquids and/or solids (e.g. dissolved or suspended in a liquid) may in such a process be converted alongside the gas. 'Electrochemical gas conversion' is a subtype of gas conversion in which the one or more chemical reactions resulting in the gas being converted include at least one electrochemical reaction (typically in the form of an electrochemically induced redox reaction), Further chemical reactions-if present-are not typically limited in their nature and may include one or more further electrochemical reactions and/or non-electrochemical reactions (e.g. non-electrochemically induced redox reactions or non-redox reactions).

As used herein, and unless otherwise specified, the term 'diffusion layer' refers to a layer that permits the gas to be converted to diffuse through it. Within the present invention, a diffusion layer may in some embodiments be present between-and thereby preclude direct physical contact between-the gas flow and the porous solid structure. To nevertheless allow the porous solid structure to have a sufficient rate of contact with the diffusing gas and thus not hamper the gas conversion, the thickness of said diffusion layer may typically be relatively thin (e.g. 10 µm or less, preferably 1 µm or less) so as to ensure sufficient transport of the gas therethrough.

As used herein, and unless otherwise specified, the term 'conformal' refers to a coating/layer that follows the contours or shape of the surface it is applied to. Examples of conformal coating techniques include electrochemical deposition, atomic layer deposition (ALD) and chemical vapor deposition (CVD). In embodiments, such a coating may also maintain a relatively uniform thickness. For example, the coating thickness may have a relative standard deviation (i.e. the ratio of the thickness' standard deviation to its arithmetic mean) of 10% or less, preferably 5% or less, more preferably 2% or less, most preferably 1% or less; and/or may have a standard deviation of 3 nm or less. In some instances, a coating may be considered uniform if it meets at least one of the two aforementioned criteria.

As used herein, and unless otherwise specified, the term 'nanoporous' refers to pores having an average pore diameter of 100 nm or less. Within this range, it is possible to further distinguish 'microporous' (average pore diameter from 0.2 to 2 nm), 'mesoporous' (average pore diameter from 2 to 50 nm) and 'macroporous' (average pore diameter above 50 nm).

As used herein, and unless otherwise specified, the term 'ionic liquid' refers to an ionic compound (i.e. a salt) that is liquid at room temperature (i.e. 20 °C). Many different ionic liquids are known in the art; e.g. based on alkylimidazolium, alkylpyridinium, quaternary ammonium or other cations and various anions such as halides (e.g. Cl⁻), borates (e.g. BF4⁻), phosphates (e.g. PF6⁻ or diethyl phosphate), sulphates (e.g. HSO₄⁻ or ethyl sulphate), etc. Specific examples include 1-ethyl-3-methylimidazolium diethyl phosphate (EMIM DEP), 1-ethyl-3-methylimidazolium chloride (EMIM CI) or 1,3-diethylimidazolium diethyl phosphate (DEIM DEP) or 1-butyl-1-methylpiperidinium bis(trifluoromethylsulfonyl)imide (BMP TFSI).

As used herein, and unless otherwise specified, the term 'hydrophobic' refers to the chemical property of an entity to be water-repellent. The hydrophobicity of the entity can be measured by determining the water contact angle. If the water contact angle is 90° or higher, the entity can be considered hydrophobic. By contrast, if the water contact angle is below 90°, the entity can be considered hydrophilic (i.e. having an affinity for water).

As used herein, and unless otherwise specified, the term 'half-cell' refers to one of the two electrodes (anode or cathode) of an electrochemical cell along with its surrounding electrolyte. For instance, a cathodic half-cell containing the cathode and its electrolyte.

In a first aspect, the present invention relates to a gas diffusion electrode for electrochemical gas conversion, comprising: i) a porous solid structure, comprising a network formed of a plurality of interconnected electrically conductive wires, and a catalytic surface for catalysing the electrochemical gas conversion, said catalytic surface being a surface of the network as such or of a catalyst coating the network; and ii) an electrolyte in the porous solid structure and in contact with the catalytic surface; wherein-in operation-at least one side of the porous solid structure is directly exposed to a gas flow comprising the gas to be converted, or indirectly exposed to said gas flow through a diffusion layer having a thickness of 10 µm or less, preferably 1 µm or less.

'Directly exposed to a gas flow' refers to the at least one side of the porous solid structure being in immediate contact with the gas flow without any intervening layers or barriers, allowing the gas to enter the porous solid structure (relatively) unimpeded. For example, the gas flow may impinge directly onto the surface of the porous electrode material. Conversely, 'indirectly exposed to said gas flow through a diffusion layer' refers to the gas flow reaching the porous solid structure by passing through a gas permeable intermediate layer (i.e. the diffusion layer) adjacent to the porous solid structure. In embodiments, the diffusion layer may be a layer of the electrolyte. For example, a layer of the electrolyte may seep out from the porous solid structure and coat the indirectly exposed side.

In embodiments, the porous solid structure may have a porosity of at least 60%; preferably at least 70%, more preferably at least 80%, most preferably at least 90%. This allows for efficient gas flow (in gaseous form) and/or diffusion (e.g. through an electrolyte) throughout the porous solid structure.

In embodiments, the network may have a volumetric surface area of from 10⁻³ m²/cm³ to 100 m²/cm³., preferably from 10 m²/mL to 30 m²/m. Herein, the term 'volumetric surface area' refers to the total surface area of the network per unit volume of the network. A network with a volumetric surface area as defined above provides a high area for catalytic reactions.

In embodiments, the porous solid structure may have a typical pore size in the order of nanometre to tens of nanometre; e.g. 5 to 500 nm, preferably 10 to 300 nm. In embodiments, the porous solid structure may have a width in the order of micrometre to metres; e.g. from 1 µm to 10 m, preferably from 10 µm to 1 m, more preferably from to 50 µm to 2 dm. In embodiments, the porous solid structure may have a length in the order of micrometres to metres; e.g. from 10 µm to 10 m, preferably from 100 µm to 1 m, more preferably from to 1 mm to 2 dm. These dimensions may for instance be as a high as industrial proton exchange membrane (PEM) or alkaline electrolyzers. In embodiments, the porous solid structure may have a height in the order of tens of nanometres to tens of micrometres; e.g. from 100 nm to 500 µm, preferably from 1 µm to 200 µm, more preferably from to 2 µm to 50 µm, such as about 4 µm to 6 µm.

The network of interconnected electrically conductive wires advantageously fulfils the role of current collector in the gas diffusion electrode. In embodiments, the electrically conductive wires may comprise a metal (e.g. Ni, Cu, Ag, Au or Pt), metal alloy (e.g. an alloy comprising at least one of the aforementioned metals) or semiconductor (e.g. Si, Ge, SiₓGe_{y}). These materials not only provide excellent electrical conductivity, but a strong mechanical robust scaffolding (e.g. compared to carbon-based materials as used in the prior art, such as by Hernandez-Aldave and Andreoli). Moreover, several of these have catalytic properties (cf. infra) and can thus provide the catalytic surface without needing a further catalytic coating. In embodiments, the network of electrically conductive wires may be formed as was disclosed in WO2019016033A1 or EP2980014A1, which are incorporated herein by reference. These-and especially the one from WO2019016033A1-are relatively facile and scalable processes for fabricating a highly tailorable array of vertical and horizontal interconnected nanowires with regular interwire spacing. The various dimensions (e.g. total dimensions, wire thickness, wire spacing; and thereby thus also porosity and volumetric area, cf. supra) can be tuned through the fabrication process. In embodiments, the electrically conductive wires may have a diameter in the order of nanometres to tens of nanometres; e.g. from 5 to 100 nm, preferably from 15 to 75 nm, more preferably from 30 to 60 nm, such as 40 nm.

In embodiments, the catalytic surface may comprise (or be) copper (Cu), silver (Ag), platinum (Pt), nickel (Ni), palladium (Pd), gold (Au), tin (Sn), bismuth (Bi), ruthenium (Ru), molybdenum (Mo) or iridium (Ir); preferably Cu, Ag, Pt, Ni, Pt or Au. To give but some examples (which are far from exhaustive): Cu can for example catalyse the conversion of CO₂ to one or more C2 carbon products (e.g. ethylene, acetaldehyde and/or ethanol); Ag can catalyse the synthesis of syngas (CO/H₂); Pt is known to catalyse a wide range of reactions, including oxidation of ethanol to acetaldehyde or acetic acid, oxidation of SO₂ to sulphuric acid, reduction of NO_{X} to N₂, catalytic hydrogenation of carbonyl, nitro or nitrile groups, etc.; Ni and Pd are likewise used in catalytic hydrogenation, among others; Au can be a very active catalyst in the oxidation of CO to CO₂.

In embodiments wherein the catalytic surface is that of a catalyst coating the network, the catalyst coating may be conformal layer. This provides a good contact between the catalyst and the network. In embodiments, the catalyst coating may be such that electrons can move between the network and catalytic surface so that electrochemical reactions can take place at/near said surface.

In embodiments, the porous solid structure may further comprise a nanoporous coating over the catalytic surface. The nanopores in the nanoporous dielectric coating may typically be through-holes, thereby exposing the catalytic surface underneath the nanoporous dielectric coating. Notwithstanding, the nanopores need not necessarily be straight and/or have a regular opening-although they may be-; hence, in some cases, the nanopores may have a tortuous pathway to the catalyst surface and/or an irregular opening. In embodiments, the nanoporous coating may have an average pore size (i.e. the average dimension of the pores coplanar with the coating) of 1 to 15 nm, preferably 2 to 8 nm. In embodiments, the nanopores may be formed via the inclusion (e.g. in a sol-gel synthesis or molecular layer deposition, see e.g. infra) and subsequent removal of a porogen (see e.g. Example 1). In some embodiments, the nanoporous coating may comprise (e.g. be) the catalyst. In these embodiments, the catalytic surface may thus be provided by the nanoporous coating. In preferred embodiments, the nanoporous coating may be a conformal coating over the catalytic surface.

In embodiments, the nanoporous coating may be a dielectric or conductive coating. In embodiments, the nanoporous coating may comprise (e.g. be) SiOz or TiO₂. In embodiments, the dielectric may be formed by a sol-gel synthesis (e.g. as was disclosed in EP4020626A1 and/or EP3974562A1; which are incorporated herein by reference) or molecular layer deposition (MLD). Titanicone (TiO₂) is an example of a material from which a conductive layer can be formed (see e.g. Example 1).

In embodiments, the gas diffusion electrode may comprise an ionic liquid confined in nanopores of the nanoporous coating. Due to the different chemical nature of the ionic liquid (compared to the electrolyte)-but also because of effects of nanoconfinement-, this allows further tailoring of the thermodynamics and kinetics of the gas conversion reaction (e.g. allowing to increase the efficiency and/or selectivity thereof).

The electrolyte in the porous solid structure being in contact with the catalytic surface refers to the electrolyte making-at least in some areas-direct physical contact with the catalytic surface. This provides an electrolyte/catalyst interface where the electrochemical reaction can optimally take place. In preferred embodiments, the electrolyte may-in operation-on the other hand be directly exposed to a gas phase (e.g. the gas flow) comprising the gas to be converted. This minimizes the diffusion path for the gas to be converted. In embodiments, the electrolyte may be a liquid, a (nanoporous) solid, a polymer or a combination of the aforementioned. In embodiments, the electrolyte may be an electrolyte coating over the catalytic surface. If present, the electrolyte coating may be over (e.g. on) the nanoporous coating. In embodiments, the electrolyte coating may be a conformal electrolyte coating. For example, the electrolyte may conformally coat the nanoporous coating, the nanopores in said coating and catalytic surface exposed by said nanopores.

In embodiments, the electrolyte may be in the porous solid structure in such a way that the porous solid structure further comprises gas channels. Herein, 'gas channels' refers to passages within the porous solid structure that remain unfilled with electrolyte, allowing gases (e.g. the gas flow) to move (e.g. flow or diffuse in gaseous form) through these channels within the structure. For example, the electrolyte may not completely flood all pores (e.g. not or only partially filling at least some of the pores), providing pathways for gas movement. This allows for efficient gaseous transport of the gas to be converted to near the catalytic surface (e.g. separated therefrom only by the electrolyte coating). In preferred embodiments, the electrolyte coating may be a thin film (e.g. having a thickness of 2-50 nm, preferably 5-25 nm). An electrolyte thin film is ideal for minimizing the diffusion path of gaseous reactants (e.g. the gas to be converted), thereby considerably improving the mass transport of said reactants to the catalytic surface (where the electrochemical gas conversion can take place). Moreover, an electrolyte thin film is also ideal for minimizing the formation and accumulation of gas bubbles, which can pose a risk of hindering or preventing the supply of reactants. Such an electrolyte coating may for example be formed of adsorbed species (e.g. water) sourced from the gas mixture); see also Example 1 and 2. In other embodiments, the electrolyte coating may be a thicker coating (e.g. 10 µm or less, preferably 5 µm or less, more preferably 1 µm or less). Such an electrolyte coating may for example be formed through seeping of the electrolyte from an adjacent structure (e.g. a membrane, such as a hydrogel-filled membrane) into the porous solid structure; see also Example 3.

In some-less preferred, as these typically involve considerably longer diffusion paths, even if not as high as diffusion through a bulk electrolyte-embodiments, the electrolyte may substantially completely fill the porous solid structure (though without the gas diffusion electrode being submerged in the electrolyte, i.e. having at least one side directly or indirectly-as defined above-exposed to the gas/gas mixture).

In embodiments, the porous solid structure may further comprise a hydrophobic coating for confining the electrolyte in the porous solid structure. This can prevent the electrolyte from seeping out of the porous solid structure, and creates a clean interface between the (wet) network and the (dry) support (cf. infra) and/or gas flow field; see also Example 3.This hydrophobic coating may typically be gas permeable. In embodiments, the hydrophobic coating may be selected from PTFE (polytetrafluoroethylene), carbon or another polyolefin material. In embodiments, the hydrophobic coating may be provided over the support and/or (one or more sides of) the network and/or inside the network.

In embodiments, the porous solid structure may further comprise a support (e.g. a substrate) for the network. The support is a structural element which provides mechanical stability to the network. In embodiments, the support may be gas permeable (e.g. the gas may be able to flow through the support), such as a porous support. In this case, the openings in the support may typically be considerably larger than the pores in the porous solid structure (e.g. at least 10 times larger, preferably at least 50 times, more preferably at least 100 times, most preferably at least 200 times, such as at least 1000 times).

In embodiments, any feature of any embodiment of the first aspect may independently be as correspondingly described for any embodiment of any of the other aspects.

In a second aspect, the present invention relates to an electrochemical cell comprising the gas diffusion electrode according to any embodiment of the first aspect.

In preferred embodiments, the gas diffusion electrode may be used as a cathode. In other embodiments, the gas diffusion electrode may be used as an anode. In some embodiments, both the cathode and anode may be a gas diffusion electrode according to the present invention.

In embodiments, the electrochemical cell may comprise a first half-cell being a gas diffusion half-cell (i.e. a half-cell configured for gas diffusion therethrough) comprising the gas diffusion electrode, and a second half-cell. In some embodiments, the second half-cell may be a liquid half-cell (i.e. a half-cell with a bulk electrolyte, e.g. having the electrode submerged in the bulk electrolyte). In other embodiments, the second half-cell may be another gas diffusion half-cell (e.g. comprising a second gas diffusion electrode according to the present invention.

In embodiments, the electrochemical cell may comprise an assembly of the gas diffusion electrode, and a membrane in ion conductive contact (i.e. positioned adjacent to the gas diffusion electrode such that ions can move from the electrolyte within the electrode into the membrane-or vice versa-, allowing ion transport between the gas diffusion electrode and the membrane) with the electrolyte in the gas diffusion electrode. This allows for efficient ion transport between the gas diffusion electrode and the opposing half-cell. In embodiments, the membrane may be a diaphragm, a semipermeable membrane, an ion-exchange membrane, a hydrogel-filled membrane or a solid electrolyte. In embodiments, the gas diffusion electrode may be direct physical contact with the membrane. The gas diffusion electrode may thus comprise a so-called 'zero-gap' membrane-electrode assembly.

In embodiments, the electrochemical cell may be configured for receiving the gas (mixture) at an elevated pressure, e.g. between 2 and 50 bar, such as between 3 and 20 bar or 5 and 10 bar.

In embodiments, any feature of any embodiment of the second aspect may independently be as correspondingly described for any embodiment of any of the other aspects.

In a third aspect, the present invention relates to a method for converting a gas, comprising:
a) providing a gas flow comprising the gas to be converted alongside and/or through a porous solid structure of a gas diffusion electrode in an electrochemical cell according to any embodiment of the second aspect, and b) energizing the network of interconnected electrically conductive wires to electrochemically convert the gas.

Providing a gas flow comprising the gas to be converted alongside and/or through the porous solid structure entails that the gas flow is directed so that the gas contacts the porous solid structure (e.g. at least exterior surface thereof) and/or passes through it, enabling gas exchange with electrolyte.

In embodiments, step a may comprise contacting the gas (not necessarily in gaseous form, e.g. dissolved in the electrolyte) with the catalytic surface. This allows the gas to undergo the desired electrochemical reactions for gas conversion. In some embodiments, the gas conversion may be a multi-step reaction, not all of which need to be electrochemical (e.g. the gas may undergo an electrochemical reaction near the catalytic surface and than react further with other species in the electrolyte, ionic liquid and/or gas flow).

In embodiments, the gas to be converted may be CO, CO₂, NO_{X}, N₂, H₂O, CH₄ and/or O₂ , preferably CO₂. These are common pollutants in gas mixtures (e.g. industrial flue gasses or even ambient air) for which there is often a desire to convert them into more useful and/or less harmful products; especially CO₂ being a predominant greenhouse gas for which efficient and economical conversion methods are still lacking. In embodiment, the gas may be converted into C1 (e.g. CO or CH₄) or C2 (e.g. ethylene or ethanol) products. These are useful chemical reagents as such, and/or may be turned into other valuable products like more complex chemical reagents, synthetic fuels, etc.

In preferred embodiments, the gas flow may be a relatively dilute gas (i.e. dilute in the gas to be converted and without prior up-concentration), such as gas mixtures which are the product of industrial processes (e.g. a flue gas) or ambient air. Notwithstanding, in some embodiments, the gas may have been concentrated prior to step a. In embodiments, the gas to be converted may in the gas flow have a partial pressure of from 0.1 to 20 bar, preferably from 0.2 to 10 bar, such as from 0.4 to 1 bar.

In embodiments, energizing (e.g. powering) the network may comprise running a current through the network. In embodiments, step b may comprise operating the network at a current density of from 1 to 10000 mA/cm² (or even higher), preferably 100 to 5000 mA/cm², more preferably from 600 to 3000 mA/cm².

In embodiments, the gas conversion may involve at least one further reactant (e.g. H₂O or H₂). In some embodiments, the gas flow may comprise said further reactant. In this case, the further reactant may also diffuse through the electrolyte. In other embodiments, the electrolyte as such (e.g. seeping from a nearby structure) may comprise the further reactant. In embodiments, the electrochemical cell may be part of a system adapted (e.g. comprising means) for adding the further reactant to the gas flow and/or to the electrolyte. For example, the water content in the gas flow may be increased prior to supplying it to the electrochemical cell.

In embodiments, any feature of any embodiment of the third aspect may independently be as correspondingly described for any embodiment of any of the other aspects.

In a fourth aspect, the present invention relates to a use of a gas diffusion electrode according to any embodiment of the first aspect for electrochemical gas conversion.

In embodiments, any feature of any embodiment of the fourth aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the technical teaching of the invention, the invention being limited only by the terms of the appended claims.

### Example 1: Gas Diffusion Electrode with Thin Electrolyte Laver Gas Diffusion Electrode

We now refer FIG 1, schematically depicting a porous solid structure (20) for use in electrochemical gas conversion. The basis of the porous solid structure (20) is a network (30) formed of a plurality of interconnected electrically conductive wires. The precise nanostructure morphology, wire spacing, diameter and composition of the network (30) can generally be tailored (e.g. through the choice of material and/or deposition conditions like temperature, pressure and concentrations) and selected depending on the desired properties. Notwithstanding, the network (30) can for instance be formed as was disclosed in WO2019016033A1 or EP2980014A1. Such networks combine a (remarkably high) volumetric surface area, with good porosity, high electrical conductance and strong mechanical robustness. For example, forming the network (30) may involve anodizing (e.g. in oxalic acid) a Cu-doped Al layer to form 3D interconnected nanopores in the anodized aluminium oxide (AAO) template. Next, a metal (e.g. Ag) is plated inside the AAO template followed by dissolving the AAO template (e.g. in 0.5 M KOH) to yield a 3D structured, interconnected metallic nanomesh.

In the close-up depicted in FIG 2, in addition to the (network of) electrically conductive wires (30), the porous solid structure (20) further comprises a catalyst (31) coating the network (30) (which provides the catalytic surface (32) for catalysing the electrochemical gas conversion) and a nanoporous coating (40) wrapping around the catalytic surface (32). Note though that several variations on this are possible; for instance, the electrically conductive wires (30) may be made of a material with catalytic properties (e.g. a metal or alloy such as Cu, which is a versatile catalyst for the production of C2 carbon products like ethylene, acetaldehyde and/or ethanol), so that a separate catalyst coating (31) is not required and the catalytic surface (32) can be the surface of the network (30) itself.

Similarto the network (30), the composition, thickness and porosity of the nanoporous coating (40) can generally be selected depending on the desired properties. Notwithstanding, the nanoporous coating (40) can for instance be formed as was disclosed in EP4020626A1 and/or EP3974562A1. For example, the nanoporous coating (40) may be prepared through an electrochemically induced sol-gel method. In one instance, a silica sol-gel synthesis was performed using an aqueous/organic solvent mixture containing an alkoxysilane precursor. The mildly acidic precursor solution was kinetically stable, allowing the hydrolysis reaction to proceed until equilibrium while inhibiting condensation. The network (30) was submerged in the precursor solution, and electrochemical reactions were used to alter the pH in the diffusion layer near the electrode, triggering local gelation and resulting in the growth of a uniform, conformal (e.g. TiOz) coating of 5-25 nm on the nanowires. To make the coating nanoporous, a porogen (e.g. soft-template molecules, such as a surfactant-for example cetyltrimethylammonium bromide, CTAB) may for example be added during the coating process, leading to the formation of highly organized nanocomposite structures that can be transformed into a nanoporous thin film upon removal of the porogen. Alternatively, the nanoporous coating (40) could for instance also be formed using molecular layer deposition (MLD) to form an oxide-porogen hybrid thin film, followed by porogen removal (e.g. through dissolution thereof in a solvent, such as an alcohol like ethanol) to form the nanopores. Regardless, the nanoporous coating (40) can comprise a relatively dense array of nanopores (41) (for instance with a diameter of about 2-8 nm) which are open to electrochemistry. Moreover, at least in the case of titanicone (TiO₂), it was observed that the coating formed is itself a conductive layer, with a conductivity between 0.5-0.7 mS/cm.

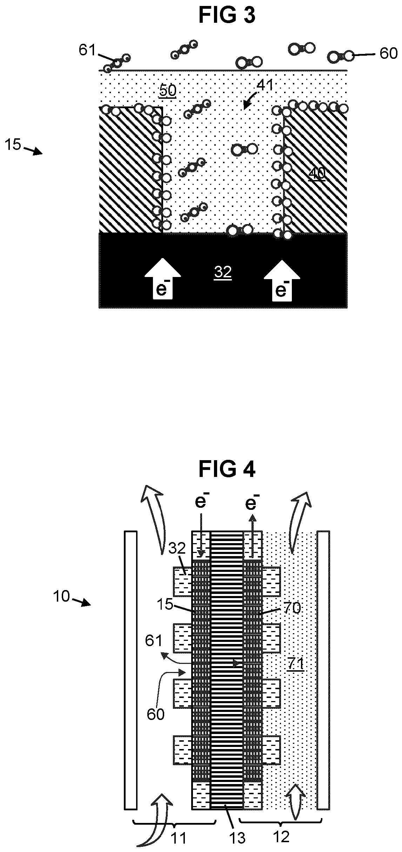

As further depicted in FIG 3, a thin electrolyte film (50) is naturally formed on the nanoporous coating (40) trough the adsorption from the gas phase of e.g. water (61) (e.g. providing water molecules, H⁺ and/or OH⁻ for the electrochemical reactions), filling the nanopores (41). Each individual nanopore (41) in the nanoporous coating (40) thereby defines essentially (given their very close proximity in the order of a few to at most a few tens of nanometres) a gas-liquid-solid triple phase environment in the combination of the solid catalytic interface (31) (and nanoporous coating (40)), liquid adsorbed electrolyte (50) and-beyond the adsorbed electrolyte-gas in the pores of the porous solid structure (20). As such, each nanopore (41) forms a nanoreactor in which electrochemical reactions can take place at the interface of liquid electrolyte and solid catalytic surface (32), while being in close contact with the gas phase, so that the gas precursors (e.g. the gas to be converted (60)) need to bridge only a few to few tens of nanometres. In other words, each nanopore (41) is a short channel that connects the gas flow to the catalytic surface (32) through a thin film of electrolyte (50). Because the length of the diffusion path for the gas (60) is only the thickness of the electrolyte film (50) (e.g. about 5-25nm), it is expected that the electrochemical conversion is no longer-or at least much less so-diffusion limited, to the point where depletion of the gas to be converted (60) in the gas mixture can become the main limiting factor (which can be addressed by increased-e.g. forced-gas flow through/along the porous solid structure (20)). Similarly, the short distance allows gaseous reaction products to be quickly evacuated to the gas phase. Any liquid reaction (by)products can migrate through the electrolyte (50) and be removed in that way. To the extent that the electrolyte (50) serves as a co-reagent (e.g. providing water molecules, H⁺ and/or OH⁻ ) for the electrochemical reaction(s), it may be continuously replenished (e.g. through adsorption of humidity (61) in the gas mixture). Moreover, the nanoconfined gas-liquid-solid triple phase environment creates unique properties that influences the thermodynamics and kinetics of the electrochemical reactions, which can positively influence which products are being formed.

Thanks to the relatively dense array of nanopores (41) in the nanoporous coating (40), the porous solid structure (20) comprises an equally large number of nanoreactors (e.g. in the order of a trillion per geometric cm²).

### Electrochemical Cell

We now refer to FIG 4, showing an electrochemical cell (10) using the above described gas diffusion electrode (15) as cathode. More specifically, the electrochemical cell (10) comprises a first half-cell (11) comprising the gas diffusion cathode (15)-with the network (30) borne on a support (35)-directly exposed to a gas flow comprising the gas to be converted (60). For example, a gas mixture with the gas to be converted (60) may be supplied at the bottom left, while the gas mixture after conversion (i.e. having at least some of the gas to be converted (60) depleted, but potentially enriched with gaseous reaction products) can be recovered at the top right. Other than the adsorbed electrolyte (50) (cf. supra), the gas diffusion electrode (15) is in this setup free of catholyte.

As depicted, the second half-cell (12) uses a traditional architecture (i.e. an anode (70) submersed in an anolyte (71)). Notwithstanding, in other embodiments both the anode and cathode- or only the anode-may be a gas diffusion electrode (15) as above described. The two half-cells (11 and 12) are separated by a membrane (13) acting as an electronic insulator and reactant barrier but allowing the passage of ionic species (e.g. H⁺ and/or OH⁻). This could be a proton-exchange membrane (PEM), anion-exchange membrane (AEM) or non-ion selective membrane.

Thanks to the combination of high surface area (i.e. network (30) with high volumetric surface area) and reactive sites (nanopores (41) in the nanoporous coating (40) forming nanoreactors)-leading to a very large area for gas capture and exchange-, highly conductive current collector (e.g. metal, alloy or semiconductor electrically conductive wires (30), leading to minimal ohmic losses in the current collector) and minimal diffusion length for the gas (60) (adsorbed electrolyte film (50) in/over the nanoporous coating (40)), such an electrochemical cell (10) can achieve a reasonable throughput (e.g. an improvement in throughput of roughly 3 orders of magnitude, with a current density of at least 600 mA/cm² and in theory up to several thousands of mA/cm² compared to current bulk electrolyte-fed electrolysers which are limited to a current density of around 10 mA/cm²) converting even dilute gas mixtures (e.g. a typical flue gas, or even ambient air) at atmospheric pressure without the need for up-concentration.

### Example 2: Gas Diffusion Electrode with Thin Electrolyte Layer and Confined Ionic Liquid

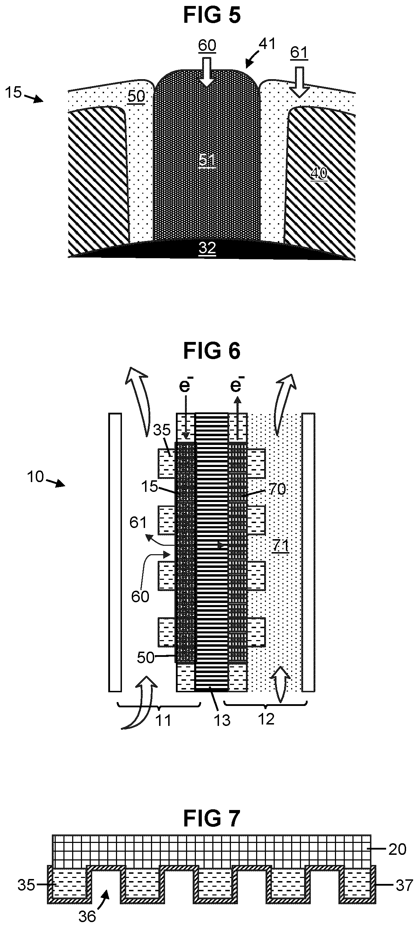

Example 1 can be repeated, but additionally using a (gas permeable) ionic liquid (51) in the nanopores (41) of the nanoporous coating (40), as e.g. depicted in FIG 5. In this case, the adsorbed electrolyte film (50) is still present and coats the nanoporous coating (40), but does not completely fill the nanopore (41). Instead the remainder is filled by the ionic liquid (51), confined in the nanopore (41). The ionic liquid (51) creates additional opportunities to modify and tailor the thermodynamics and kinetics of the gas conversion reaction. For example, it allows a combination of aqueous (in the electrolyte film (50)) and non-aqueous (in the ionic liquid (51)) reactions near the same catalyst (31) region, where the affinity, mobility and stabilization of different reagents, intermediates and reaction products are different in each phase (i.e. aqueous and non-aqueous). The nanoconfinement of the ionic liquid (51) moreover imparts particular properties to it (i.e. distinct from a bulk ionic liquid (51)), e.g. due to molecular ordering effects at these length scales. In this regard, the confined ionic liquid (51) may exhibit solid-like properties and the combination of adsorbed electrolyte and confined ionic liquid (51) may be referred to as a solid-or at least mesophase-nanocomposite electrolyte (NCE).

### Example 3: Electrolyte-Wetted Electrochemical Cell and Gas Diffusion Electrode

We now refer to FIG 6, which depicts another type of electrochemical cell (10) that is substantially similar to the one described in Example 1, but wherein the nanoporous coating (40) is optional and-rather than a thin adsorbed film-a thicker (e.g. 10 µm or less, preferably 5 µm or less, more preferably 1 µm or less) electrolyte (here catholyte) layer (50) coats (wets) the pores of the porous solid structure (20). This thicker electrolyte layer (50) does typically still not fill the entire pores of the porous solid structure (20), although in some instance it may nevertheless do so (for at least some of the pores). Moreover, by not having a bulk electrolyte, the formation and accumulation of gas bubbles that pose a risk of hindering or preventing the supply of reactants is substantially diminished (and may be further diminished as the thickness of the electrolyte used is reduced).

This thicker layer (50) of electrolyte can for example be an electrolyte seeping from a separating membrane (13) (e.g. a hydrogel-filled membrane). It is kept in the porous solid structure (20) by a (gas permeable) hydrophobic coating (37) (e.g. polytetrafluoroethylene, PTFE) on the support (35) side of the porous solid structure (20)-as e.g. depicted in FIG 7-, thereby providing a clear separation and clean interface with the gas flow field (cf. infra). For example, possible methods include the deposition of a thin layer (37) of a polymer or other classes of materials that is hydrophobic but still porous to gasses (gas permeable), such as PTFE (polytetrafluoroethylene), carbon, another polyolefin material, among others. In this case, the hydrophobic coating (37) is not applied directly on the surface of the porous solid structure (20), but rather on the support (35) itself and over the openings (36) the latter leaves for the gasses to reach the nanomesh.

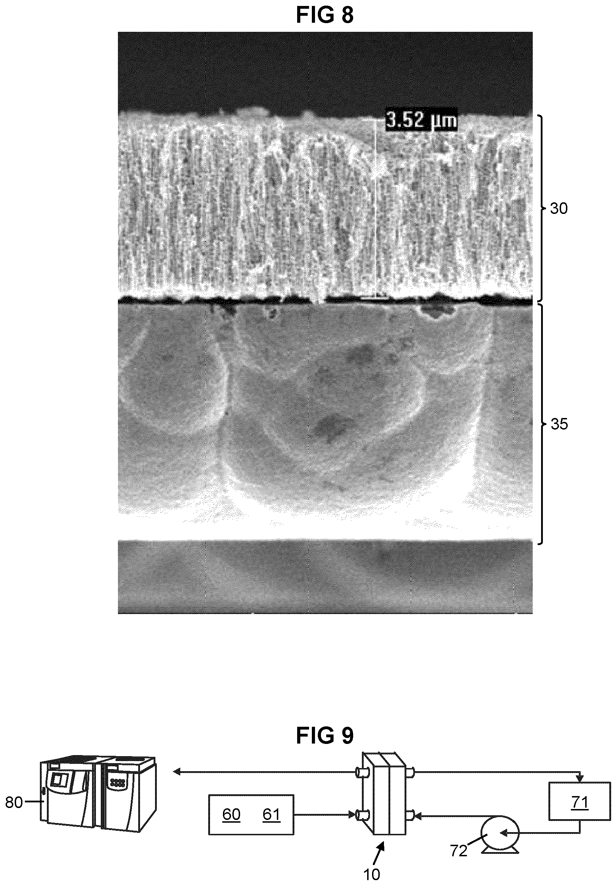

The difference with a traditional submersed electrode is that the diffusion length through the thicker electrolyte layer (50) is still orders of magnitude smaller than it would be through a bulk electrolyte. While much larger than the diffusion lengths in Example 1 and 2, such an electrolyte-wetted gas diffusion electrode (15) is still beneficial over the prior art (e.g. as disclosed by Hernandez-Aldave and Andreoli, cf. supra) for several reasons. First, the high electrical conductivity of the network (30) of interconnected electrically conductive wires (i.e. the current collector) results in considerably lower Ohmic losses than with the carbon-based materials of the prior art. Second, the high volumetric surface area provides a lot of catalytic surface area for the electrochemical gas conversion. Third, the network (30) of interconnected electrically conductive wires (e.g. made of metal, alloy or semiconductor) is more mechanically robust. Fourth, as e.g. illustrated in FIG 8, a very clean interface with a clear distinction between two domains-the (wetted) network (30) and the (dry, hydrophobic) support (35)-is obtained; as opposed to a very irregular such interface in the prior art with a coarse and uneven structure, which results in interface instability and device degradation over time. A comparative image of another prior art coarse and uneven structure can be seen in Fig. 3A and B of Dinh et al. (DINH, Cao-Thang, et al. CO2 electroreduction to ethylene via hydroxide-mediated copper catalysis at an abrupt interface. Science, 2018, 360.6390: 783-787.), wherein PTFE is the (dry) hydrophobic support and Cu is the catalyst layer.

In proof of concept trials, an experimental setup as depicted in FIG 9 was used for the electrochemical conversion of CO₂ to CO. Therein, the cathode comprised a silver nanomesh as the network (30), provided on a support (35). Samples were made with and without the support (35) side covered with a hydrophobic PTFE coating (cf. FIG 7), and their results were compared. The anode was a platinum electrode in a traditional liquid half-cell, comprising an aqueous anolyte solution with potassium bicarbonate (KHCOs), potassium carbonate (K₂CO₃) and/or similar compounds. The anolytes had a concentration ranging from 0.1 M to 1.0 M and was recirculated through the anode half-cell (thus forming a closed circuit) at a rate of 49 mL/minute. The two half-cells were separated by a hydroxide exchange membrane (HEM).

The electrochemical cell (10) was operated with a CO₂ (60) partial pressure of 1 to 10 bar (unlike Example 1 and 2, it was not possible to perform the electrochemical conversion of dilute gas mixtures), supplied through an active gas flow through the cathode half-cell and entering the half-cell at a rate of 50 mL/minute. This gas flow was typically a mixture comprising the CO₂ (60) (0 to 100 vol%) and supplemented with nitrogen (N₂), with a relative humidity (61) ranging from 10 to 100%. Applied current densities ranged from 10 to 100 mA/cm². The anolyte (71) was recirculated using a pump (72) and the gaseous conversion products were analysed using a gas chromatograph (80).

The experimental results obtained indicated that, even in this unoptimized setup, performance equal to or better than has been described in the prior art could be obtained. Compared to a planar Ag electrode, the present half-cell with gas diffusion electrode could be operated with a lower cell potential, which reduces the energy costs. This can be explained through the porous solid structure's higher available surface area, allowing more reaction sites to be reachable without requiring an extra amount of energy.

The results further demonstrated that hydrophobically coated gas diffusion electrodes achieve higher CO selectivity and partial current density compared to uncoated gas diffusion electrodes. More in particular, the hydrophobically coated gas diffusion electrode reached a partial current density of 276 mA/cm² for CO production, which is more than a twentyfivefold improvement over an uncoated gas diffusion electrode (which is capped around 10 mA/cm²). The enhanced performance was attributed to a reduced CO₂ diffusion distance when the electrolyte is confined by the hydrophobic coating, and a better-defined gas-liquid interface in the coated configuration (cf. supra). After further optimization, a target of 1000 mA/cm² is believed to be achievable.

It is to be understood that although preferred embodiments, specific constructions, configurations and materials have been discussed herein in order to illustrate the present invention. It will be apparent to those skilled in the art that various changes or modifications in form and detail may be made without departing from the scope of the invention as defined in the appended claims.

## Claims

1. A gas diffusion electrode (15) for electrochemical gas conversion, comprising:
i) a porous solid structure (20), comprising
- a network (30) formed of a plurality of interconnected electrically conductive wires, and
- a catalytic surface (32) for catalysing the electrochemical gas conversion, said catalytic surface (32) being a surface of the network (30) as such or of a catalyst (31) coating the network (30); and
ii) an electrolyte (50) in the porous solid structure (20) and in contact with the catalytic surface (32);
wherein-in operation-at least one side of the porous solid structure (20) is
- directly exposed to a gas flow comprising the gas to be converted (60), or
- indirectly exposed to said gas flow through a diffusion layer having a thickness of 10 µm or less, preferably 1 µm or less.

2. The gas diffusion electrode (15) according to claim 1, wherein the electrically conductive wires comprise a metal, metal alloy or semiconductor.

3. The gas diffusion electrode (15) according to any of the previous claims, wherein the electrolyte (50) is in the porous solid structure (20) in such a way that the porous solid structure (20) comprises gas channels.

4. The gas diffusion electrode (15) according to claim 3, wherein the electrolyte (50) is an electrolyte coating over the catalytic surface (32).

5. The gas diffusion electrode (15) according to any of the previous claims, wherein the porous solid structure (20) further comprises a nanoporous coating (40) over the catalytic surface (32).

6. The gas diffusion electrode (15) according to claim 5, comprising an ionic liquid (51) confined in nanopores (41) of the nanoporous coating (40).

7. The gas diffusion electrode (15) according to any of the previous claims, wherein the porous solid structure (20) further comprises a hydrophobic coating (37) for confining the electrolyte (50) in the porous solid structure (20).

8. An electrochemical cell (10) comprising the gas diffusion electrode (15) according to any of the previous claims.

9. The electrochemical cell (10) according to claim 8, wherein the gas diffusion electrode (15) is used as a cathode.

10. The electrochemical cell (10) according to any of claims 8 to 9, comprising
- a first half-cell (11) being a gas diffusion half-cell comprising the gas diffusion electrode (15), and
- a second half-cell (12).

11. The electrochemical cell (10) according to any of claims 8 to 10, comprising an assembly of
- the gas diffusion electrode (15), and
- a membrane (13) in ion conductive contact with the electrolyte (50) in the gas diffusion electrode (15).

12. A method for converting a gas, comprising:
a) providing a gas flow comprising the gas to be converted (60) alongside and/or through a porous solid structure (20) of a gas diffusion electrode (15) in an electrochemical cell (10) as defined in any of claims 8 to 11, and
b) energizing the network (30) of interconnected electrically conductive wires to electrochemically convert the gas.

13. The method according to any of claims 12, wherein the gas to be converted (60) is CO₂.

14. The method according to any of claims 12 to 13, wherein the gas flow comprises at least one further reactant for the gas conversion.

15. Use of a gas diffusion electrode (15) as defined in any of claims 1 to 7 for electrochemical gas conversion.
